# EUROPÄISCHE PATENTSCHRIFT

(11) **EP 2 789 490 B1**
(45) Veröffentlichungstag und Bekanntmachung des Hinweises auf die Patenterteilung: **21.06.2017**
(21) Anmeldenummer: 14154094.8
(22) Anmeldetag: 06.02.2014
(51) Int. Cl.: B60K 15/04, B60K 15/03, B60K 15/035

(54) **Befüllkopf für einen Flüssigkeitstank**
Filling head for a liquid tank
Tête de remplissage pour un réservoir de liquide

(30) Priorität: 11.04.2013 DE 102013103624
(43) Veröffentlichungstag der Anmeldung: 15.10.2014
(73) Patentinhaber: VERITAS AG, 63571 Gelnhausen (DE)
(72) Erfinder: Groß, Michael, 61203 Reichelsheim (DE); Kirchner, Hendrik, 63607 Wächtersbach (DE)
(74) Vertreter: Patentship Patentanwaltsgesellschaft mbH

(56) Entgegenhaltungen:
- EP-A2- 0 357 874
- DE-A1-102011 009 745
- DE-U1-202005 011 575
- DE-U1-202011 105 302
- US-A1- 2010 200 115

## Beschreibung

Die vorliegende Erfindung betrifft einen Befüllkopf mit einem Einfüllstutzen für ein Zapfventil für einen Flüssigkeitstank in einem Kraftfahrzeug.

Die gattungsbildende Offenlegungsschrift DE 10 2011 009 745 A1 zeigt einen Einfüllstutzen. Der Einfüllstutzen ist an einem Einfüllrohr eines Nebenflüssigkeitsbehälters angeordnet.

Die Offenlegungsschrift US 2010/200115 A1 zeigt einen Einfüllstutzen und eine Führung. Der Einfüllstutzen wird auf die Führung gesetzt, wobei zwischen dem Einfüllstutzen und der Führung ein Dichtring vorgesehen ist. Der Dichtring ist an einem Trägerring angeordnet. Während eines Befüllvorgangs mit einem herkömmlichen Befüllkopf kann Flüssigkeit durch Luftturbulenzen aus dem Tanksystem spritzen, säuseln oder tropfen. Zum Zeitpunkt einer automatischen Abschaltung des Zapfventils kann sich der noch verbliebene Tankinnendruck als rückschwappende Welle durch die Einfüllleitung in die Umwelt entladen. Eine unzureichende Entlüftungsleistung kann ein Auslösen der automatischen Abschaltung der Zapfpistole verhindern.

Es ist die der Erfindung zugrundeliegende Aufgabe, einen für eine Zapfventilautomatik geeigneten Befüllkopf anzugeben, der auf technisch einfache Art und Weise hergestellt werden kann und ein Austreten von Flüssigkeit verhindert.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Befüllkopf mit einem Einfüllstutzen für ein Zapfventil gelöst, mit einem ersten Gehäuseteil mit einem ersten Einfüllstutzenabschnitt; einem zweiten Gehäuseteil mit einem zweiten Einfüllstutzenabschnitt; einem Dichtelement zwischen dem ersten und dem zweiten Einfüllstutzenabschnitt und einem Magnetelement, das mit dem Dichtelement mechanisch verbunden ist. Das Magnetelement kann beispielsweise in dem Dichtelement integriert sein. Beispielsweise kann das Magnetelement vollständig von dem Dichtelement umgeben sein. Der Befüllkopf dient beispielsweise als Befüllkopf für einen Flüssigkeitstank in einem Kraftfahrzeug, wie beispielsweise einem Tank für eine wässrige Harnstofflösung. Durch die mechanische Verbindung wird beispielsweise der technische Vorteil erreicht, dass bei einem Produktionsprozess ein Magnetelement zusammen mit dem Dichtelement eingesetzt werden kann und sich die Anzahl der Arbeitsschritte verringert.

In einer vorteilhaften Ausführungsform des Befüllkopfes umfasst das Dichtelement eine in den Einfüllstutzen ragende, umlaufende Lamelle zum Abdichten eines Zwischenraums. Dadurch wird beispielsweise der technische Vorteil erreicht, dass der Zwischenraum

In einer weiteren vorteilhaften Ausführungsform des Befüllkopfes ist die Austrittsöffnung zwischen dem ersten Einfüllstutzenabschnitt und dem Dichtelement gebildet. Dadurch wird beispielsweise der technische Vorteil erreicht, dass das erste Gehäuseteil sich auf einfache Weise mit einer Austrittsöffnung im Spritzgussverfahren herstellen lässt.

In einer weiteren vorteilhaften Ausführungsform des Befüllkopfes ist das Dichtelement aus einem harnstoffresistenten Material gebildet. Die harnstoffresistenten Materialien umfassen beispielsweise thermoplastistische Elastomere. Dadurch wird beispielsweise der technische Vorteil erreicht, dass eine besonders gute Dichtwirkung und ein Schutz vor Korrosion erzielt werden.

In einer weiteren vorteilhaften Ausführungsform des Befüllkopfes umgibt das Dichtelement das Magnetelement vollständig. Dadurch wird beispielsweise der technische Vorteil erreicht, dass eine Beschädigung des Magnetelements durch Korrosion verhindert wird.

In einer weiteren vorteilhaften Ausführungsform des Befüllkopfes bildet das erste Gehäuseteil mit dem zweiten Gehäuseteil einen Entlüftungskanal, der an einer Außenseite des Dichtelements verläuft. Dadurch wird beispielsweise der technische Vorteil erreicht, dass ein Separations- und Medientrennbereich im rückwärtigen Raum des Entlüftungskanals entsteht, in dem mitgeführte Reste des Mediums erst von der Abluft separiert werden, und dann das abgeschiedene Medium durch eine Rücklaufbohrung in den Befülltank zurückgeführt wird. Dadurch wird verhindert, dass das Medium aus dem Befüllkopf austreten kann.

In einer weiteren vorteilhaften Ausführungsform des Befüllkopfes bildet die Innenwandung des Dichtelementes einen Teillabschnitt des Einfüllstutzens. Das Dichtelement weist beispielswese eine zylindrische Innenwandung auf. Dadurch wird beispielsweise der technische Vorteil erreicht, dass ein in das Dichtelement integrierter Magnetring näher an den Einfüllstutzen herangeführt werden kann als wenn ein außerhalb des Einfüllstutzens angeordneter mit einer Korrosionsschutzhülle versehener Magnetring verwendet wird.

In einer weiteren vorteilhaften Ausführungsform des Befüllkopfes bildet das erste Gehäuseteil mit dem zweiten Gehäuseteil eine umlaufende Entlüftungskammer, die das Dichtelement zumindest teilweise umgibt. Dadurch wird beispielsweise der technische Vorteil erreicht, dass eine Entlüftungskammer entsteht, in der sich mitgerissene Flüssigkeit sammelt und durch ein Rücklaufloch und in den Tank zurückgeführt werden kann.

In einer weiteren vorteilhaften Ausführungsform des Befüllkopfes umfasst das zweite Gehäuseteil einen Einlass in die Entlüftungskammer. Dadurch wird beispielsweise der technische Vorteil erreicht, dass die Entlüftungskammer von einem unteren Bereich des Befüllkopfes außer über den Einlass getrennt ist.

In einer weiteren vorteilhaften Ausführungsform des Befüllkopfes sind das erste Gehäuseteil und/oder das zweite Gehäuseteil Spritzgussformteile. Dadurch wird beispielsweise der technische Vorteil erreicht, dass sich die Gehäuseteile auf einfache Weise herstellen lassen.

Ausführungsbeispiele der Erfindung sind in den Zeichnungen dargestellt und werden im Folgenden näher beschrieben.

Es zeigen:
- Fig. 1: eine Ansicht eines Befüllkopfes;
- Fig. 2: eine Querschnittsansicht des Befüllkopfes;
- Fig. 3: eine vergrößerte Querschnittsansicht des Befüllkopfes;
- Fig. 4: verschiedene Ansichten einer Ausführungsform eines Dichtelementes mit einem Magnetelement;
- Fig. 5: verschiedene Ansichten einer weiteren Ausführungsform eines Dichtelementes mit einem Magnetelement;
- Fig. 6: verschiedene Ansichten einer weiteren Ausführungsform eines Dichtelementes mit einem Magnetelement,
- Fig. 7: einen schematischen Aufbau des Befüllkopfes mit einem Entlüftungskanal; und
- Fig. 8: eine schematische Anordnung von Entlüftungsöffnungen im Inneren des Befüllkopfes.

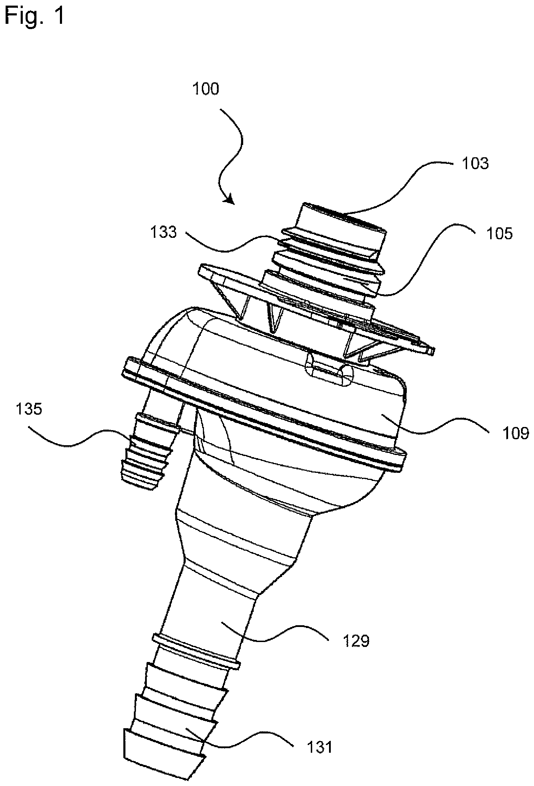

Fig. 1 zeigt eine Ansicht eines Befüllkopfes 100. Der Befüllkopf 100 dient zum Einsetzen eines Zapfventils zur Betankung eines Flüssigkeitstanks in einem Kraftfahrzeug, wie beispielsweise einem Tank für eine wässrige Harnstofflösung (SCR-Tank). Im Inneren des Befüllkopfes 100 wird ein Einfüllstutzen 103 gebildet, über den die Flüssigkeit eingefüllt wird und der das eingesetzte Zapfventil aufnimmt und abstützt.

Der obere Befüllkopf 100 ist aus einem ersten, oberen Gehäuseteil 105 und einem zweiten, unteren Gehäuseteil 109 zusammengesetzt. Dadurch wird eine kompakte Bauform des Befüllkopfes 100 erreicht. Das obere Gehäuseteil 105 umfasst ein Gewinde 133 zum Aufschrauben einer Betankungsflasche (Kruse-Flasche). Das obere Gehäuseteil 105 ist mit dem unteren Gehäuseteil 109 druckdicht verbunden, beispielsweise indem die beiden Gehäuseteile miteinander verschweißt sind.

Daneben wird ein weiteres Gehäuseteil 129 verwendet, das den unteren Teil des Befüllkopfes 100 bildet. Das Gehäuseteil 129 umfasst einen Anschlussstutzen 131 zum Anschließen eines Schlauches oder Rohres, der die eingefüllte Flüssigkeit in den Flüssigkeitstank führt und einen Tankentlüftungsstutzen 135, über den beim Betanken verdrängte Luft über einen angeschlossenen Schlauch oder Rohr zurück in den Befüllkopf 100 strömt. Der Befüllkopf 100 umfasst ein Dichtelement als Dichtung im Einfüllkanal und getrennte Entlüftungskanäle.

Die Gehäuseteile 105, 109 und 129 sind beispielsweise Kunststoff- oder Spritzgussformteile aus Polyamid (PA), Poyethylen (PE), Polyoxymethylen (POM), Polyolefin oder thermoplastischen Elastomeren auf Olefinbasis (TPO). Die Fertigung der Gehäuseteile 105, 109 und 129 aus diesen Materialien ist besonders vorteilhaft, da hierdurch eine hohe Festigkeit und Stabilität des Befüllkopfes 100 erreicht wird.

Durch die modulare Aufbauweise kann die Verwendung bei verschiedenen Kundenanforderungen gewährleistet werden. Insbesondere ist es möglich, die Abmessungen des Befüllkopfes 100 kompakt zu halten und Material und Gewicht im Vergleich zur konventionellen Aufbauweise einzusparen.

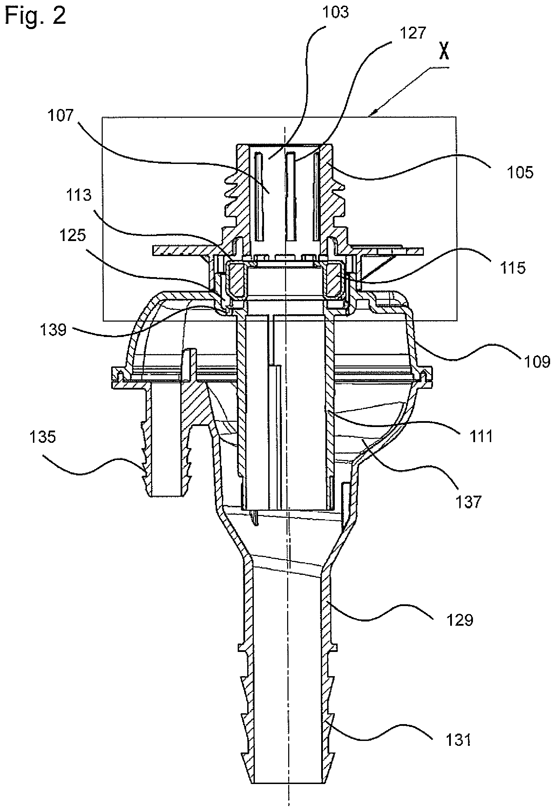

Fig. 2 zeigt eine Querschnittsansicht des Befüllkopfes 100. Das obere Gehäuseteil 105 und das untere Gehäuseteil 109 bilden den oberen Befüllkopf 100. Der Befüllkopf 100 umfasst den Einfüllstutzen 103 für ein nicht gezeigtes Zapfventil. In dem ersten Gehäuseteil 105 ist ein erster Einfüllstutzenabschnitt 107 als Teil des Einfüllstutzens 103 gebildet. In dem zweiten Gehäuseteil 109 ist ein zweiter Einfüllstutzenabschnitt 111 als weiterer Teil des Einfüllstutzens 103 gebildet. Beide Einfüllstutzenabschnitte 107 und 111 bilden zusammengesetzt den gesamten Einfüllstutzen 103 und eine Entlüftungskammer 125 um den Einfüllstutzen 103 herum. Die Entlüftungskammer 125 bildet einen Medientrenner, der gasförmige und flüssige Medien voneinander trennt.

Durch den inneren Aufbau des Befüllkopfes 100 wird ein neues Entlüftungskonzept realisiert, das beispielsweise zur Betankung mit einer wässrigen Harnstofflösung (SCR- Betankung) dient. Bei diesem Entlüftungskonzept ist es möglich, einen Flüssigkeitstank mit den vorhandenen Zapfsystemen mit einer Befüllgeschwindigkeit von bis zu 40l/min zu betanken, ohne dass die Flüssigkeit aus dem Befüllkopf 100 austritt. Auch beim mehrmaligen Nachtanken unter Verwendung der Zapfventilautomatik unterbleibt ein Austritt von Flüssigkeit. Zusätzlich ist eine Betankung mit einer aufgeschraubten Nachfüllflasche (Kruse-Flasche) oder einem Adapter für einen 5l-Kanister gewährleistet, indem eine sachgerechte Belüftung der Flasche und des Kanisters erfolgt. Durch den Befüllkopf 100 wird somit das Austreten der Flüssigkeit aus der Betankungsöffnung verhindert und eine Füllgeschwindigkeit von bis zu 40l/min erreicht. Zusätzlich ist ein mehrmaliges Nachtanken in vollem Umfang ohne Austritt von Flüssigkeit durchführbar.

Die automatische Befüllung an einer Tankstelle erfolgt durch Einstecken einer Zapfpistole in den Befüllkopf 100. Dabei wird beispielsweise eine wässrige Harnstofflösung durch den Befüllkopf 100 und ein Einfüllrohr mit einer von der Einstellung der Zapfanlage abhängigen Flussrate von bis zu 40L/min in den Flüssigkeitstank gefüllt. Bei diesem Vorgang entweicht die im Tank eingeschlossene Luft mit gleicher oder minimal geringerer Flussrate zur Tankentlüftung. Die automatische Abschaltung des Betankungsvorgangs erfolgt, wenn Flüssigkeit die Zapfpistolenspitze erreicht. Die Flüssigkeit wird dort durch eine Lamelle oder Dichtlippe zur mechanischen Versiegelung vor dem Austreten gestoppt.

Durch die bei einem Befüllvorgang verdrängte Luft erzeugt die einströmende Flüssigkeit einen Tankinnendruck. Der Tankinnendruck wird über einen Entlüftungsweg oder eine Entlüftungsleitung des Flüssigkeitstanks abgebaut. Die verdrängte Luft entweicht durch den tankseitigen Entlüftungsanschluss, durch die Entlüftungsleitung in den Befüllkopf 100 und durch das neue Entlüftungskonzept mit dem Medientrenner oder Abscheidungsbereich im Innern des Befüllkopfes 100 in die Atmosphäre.

Das Gehäuseteil 129 des Befüllkopfes 100 bildet zusammen mit dem Gehäuseteil 109 eine Befüllkopfkammer 137, die den unteren Teil des Einfüllstutzens 103 umgibt. Beim Betanken strömt die verdrängte Luft über den Tankentlüftungsstutzen 135 in die druckdichte Befüllkopfkammer 137 ein und verursacht im Inneren der Befüllkopfkammer 137 einen leichten Überdruck. Dieser Überdruck wirkt als Luftpolster und drückt Flüssigkeit, die sich möglicherweise im Befüllkopf 100 befindet, in Richtung des Auslassstutzens 131.

Dabei strömt die beim Tanken verdrängte Luft über den Tankentlüftungsstutzen 135 in den Befüllkopf 100 zurück in die Befüllkopfkammer 137. Von dort aus tritt die Luft über einen Entlüftungskammereingang 139 in die Entlüftungskammer 125 ein und wird an der Außenseite des Dichtelementes 113 vorbeigeleitet. Hierbei entsteht eine Gegenströmung der ausströmenden Luft zum Flüssigkeitsstrom.

Zwischen dem ersten und dem zweiten Einfüllstutzenabschnitt 107 und 111 ist ein Dichtelement 113 angeordnet, das die Verbindungstelle abdichtet und verhindert, dass Flüssigkeit aus dem Verbindungsbereich zwischen den Einfüllstutzenabschnitten 107 und 111 austritt. Das Dichtelement 113 ist beispielsweise aus harnstoffresistenten Materialien, wie beispielsweise thermoplastischen Elastomeren, gebildet. In diesem Fall hält das Dichtelement 113 bei einer Betankung mit einer wässrigen Harnstofflösung einem Hydrolyseangriff und Korrosion aufgrund von vorhandenem Ammoniakdämpfen und Ammoniakkontakt stand.

Innerhalb des Dichtelementes 113 verläuft ein Magnetring als Magnetelement 115 um den Einfüllstutzen 103 herum und erzeugt ein statisches Magnetfeld im Inneren des Einfüllstutzens 103, das zur Betätigung einer Zapfventilautomatik dient. Das Magnetelement umfasst ein dauermagnetisches Material, wie beispielsweise Neodym, Eisen, Kobalt, Nickel oder Ferrit, das ein statisches Magnetfeld behält, ohne dass ein elektrischer Stromfluss benötigt wird.

Das Magnetelement 115 ist durch die Integration im Inneren des Dichtelementes 113 mechanisch fest mit dem Dichtelement 113 verbunden. Durch die feste mechanische Verbindung kann in einem Produktionsprozess das Magnetelement 115 gleichzeitig mit dem Dichtelement 113 eingesetzt werden und die Zahl der zur Produktion erforderlichen Arbeitsschritte und Maschinen wird verringert. Außerdem weisen das Magnetelement 115 und das Dichtelement 113 durch die feste Verbindung eine vorgesehene Positionierung zueinander auf.

Der Magnetring 115 ist vollständig von dem Dichtelement 113 umgeben. Dadurch wird der Magnetring 115 vor Korrosion geschützt. In Fall einer Betankung mit einer wässrigen Harnstofflösung kann das Dichtelement 113 aus harnstoff- und ammoniakresistenten Material somit einen Hydrolyseangriff auf das Magnetelement 115 verhindern. Durch konstruktive Maßnahmen, wie Führungsrippen und ein verbessertes Anschlagsystem im Innern des Befüllkopfes 100 kann eine mechanische Beschädigung des Dichtelementes 113 als Magnetschutzhülle durch die Zapfpistole vermieden werden.

Im oberen Bereich des Einfüllstutzens 103 sind außerdem mehrere Abstandshalter 127 angeordnet, die sich in Längsrichtung erstrecken. Durch die Abstandshalter 127 wird das Zapfventil in der Mitte des Einfüllstutzens 103 angeordnet und zwischen dem Zapfventil und der Wandung des Einfüllstutzens 103 entsteht ein umlaufender Spalt über den ausströmende Luft entweichen kann.

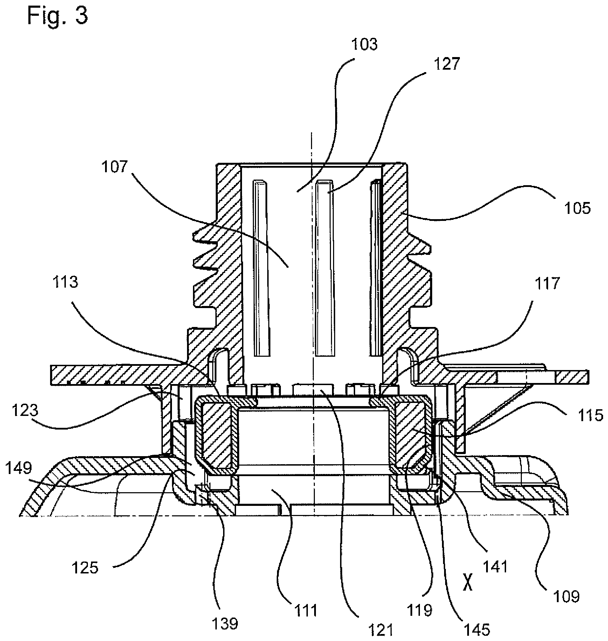

Fig. 3 zeigt eine vergrößerte Querschnittsansicht des Befüllkopfes 100. Das Dichtelement 113 umfasst eine in den Einfüllstutzen 103 ragende, umlaufende Lamelle 117 zum Abdichten eines Zwischenraums zwischen dem Zapfventil und der Innenwand des Einfüllstutzens 103. Nach dem Einsetzen des Zapfventils liegt die Lamelle am Zapfventil an. Die Lamelle 117 ist im unteren Bereich des ersten Einfüllstutzenabschnitts 107 angeordnet.

Die beiden Gehäuseteile 105 und 109 bilden um das Dichtelement 113 herum eine umlaufende, ringförmige Entlüftungskammer 125, die das Dichtelement 113 und den Entlüftungsstutzen 103 zumindest teilweise umgibt. Das Dichtelement 113 ist in die Entlüftungskammer 125 eingesetzt. Die beim Tanken verdrängte Luft strömt über den Entlüftungskammereingang 139 in die Entlüftungskammer 125 ein.

Das obere Gehäuseteil 105 umfasst im Bereich des ersten Einfüllstutzenabschnitts 107 oberhalb des Dichtelementes 113 mehrere Austrittsöffnungen 121 zum Ausleiten von Luft aus der Entlüftungskammer 125 in den Einfüllstutzen 103. Die Lage des Dichtelementes 113 im oberen Bereich der Befüllkopfes 100 ist besonders vorteilhaft, da die Betankung mit Nachfüllflaschen, wie beispielsweise der Kruse-Flasche und die Befüllung mit sämtlichen gängigen Zapfpistolen sicherstellt werden kann. Durch die Form und Lage des Dichtelementes 113 ist zusätzlich sichergestellt, dass bei allen Zapfpistolen der Abschaltpunkt bei jedem Einsteckwinkel ausgelöst wird.

Die Austrittsöffnungen 121 sind entlang des gesamten Umfangs des Einfüllstutzenabschnitts 107 verteilt. Die Austrittsöffnungen 121 sind durch Aussparungen an der Unterseite des Einfüllstutzenabschnitts 107 gebildet. Anschließend entweicht die verdrängte Luft über den oberen Teil des Einfüllstutzens 103 aus dem Befüllkopf 100, indem diese entgegengesetzt zur Flüssigkeitsströmung aus dem Einfüllstutzen 103 strömt.

Insgesamt entsteht dadurch im Inneren des Befüllkopfes 100 ein verschachtelter Entlüftungskanal 123, der an der Außenseite des Dichtelements 113 entlangläuft und über den eine Medientrennung erfolgt, so dass vom Luftstrom mitgerissene Flüssigkeitsanteile abgeschieden werden und innerhalb des Tanksystems verbleiben.

Das Dichtelement 113 aus einem harnstoffresistenten Material verhindert das Austreten von Flüssigkeit in die Umwelt. Die Entlüftung des Systems wird durch die Entlüftungskanäle 123 im Bereich des Medientrenners 149 im Bereich hinter dem Magnetelement 115 gewährleistet. Die besondere Positionierung der Entlüftungskanäle 123 erlaubt die Trennung von mitgeführten Anteilen des Mediums und des abströmenden Luftflusses. Das Ende der eingesetzten Zapfpistole befindet sich unterhalb des Dichtelementes 113. Die Abluft wird oberhalb des Dichtelementes 113 durch Austrittsöffnungen 121 abgeführt. Die Luft kann auch bei eingesetzter Zapfpistole weiterhin durch die Entlüftungskanäle 123 entweichen. Aufgrund der Fehlbetankungssperre sind die Entlüftungskanäle 123 außen zwischen einer Gehäusewand des Befüllkopfes 100 und dem Magnetring 115 positioniert.

Die Innenwandung des ringförmigen Dichtelementes 113 bildet einen Teillabschnitt des Einfüllstutzens 103. Beispielsweise weist die Innenwandung des Dichtelementes 113 eine Höhe von 0.5 cm bis 2 cm auf. In diesem Fall kann auf einfache Weise ein Magnetring 115 mit ausreichender Magnetfeldstärke zum Auslösen einer Zapfventilautomatik in dem Dichtelement 113 integriert werden. Das Dichtelement 113 mit dem Magnetring 115 ist an der Unterseite entlang des Außenumfangs mit einer Abschrägung 141 versehen. Durch die Abschrägung 141 kann das Dichtelement 113 zum einen leichter in die Entlüftungskammer 125 eingesetzt werden und dient weiter als definierte konstruktive Absicherungsmaßnahme der korrekten Magnetausrichtung und der Polarisation. Zum anderen wird ausströmende Luft in der Entlüftungskammer 125 besser um das Dichtelement 113 herumgeführt.

Im Inneren der Entlüftungskammer 125 ist eine Anzahl von Rippen 119 gebildet, die axial und radial in das Innere der Entlüftungskammer 125 hineinragen und auf denen das Dichtelement 113 zusammen mit dem Magnetelement 115 aufliegt. Die Rippen dienen zum seitlichen, axialen und/oder radialen Abstützen des Magnetelementes 115, das von dem Dichtelement 113 umgeben ist. Um den Magnetring 115 in Position zu halten, werden die angepassten axialen und radialen Rippen 119 als Auflage eingesetzt, die gleichzeitig den umlaufenden Raum für den Medientrenner 149 definieren. Durch diese Maßnahme wird das durch das Magnetelement 115 belastete Dichtungselement 113 im Inneren der Entlüftungskammer 125 nach dem Einsetzen in Position gehalten.

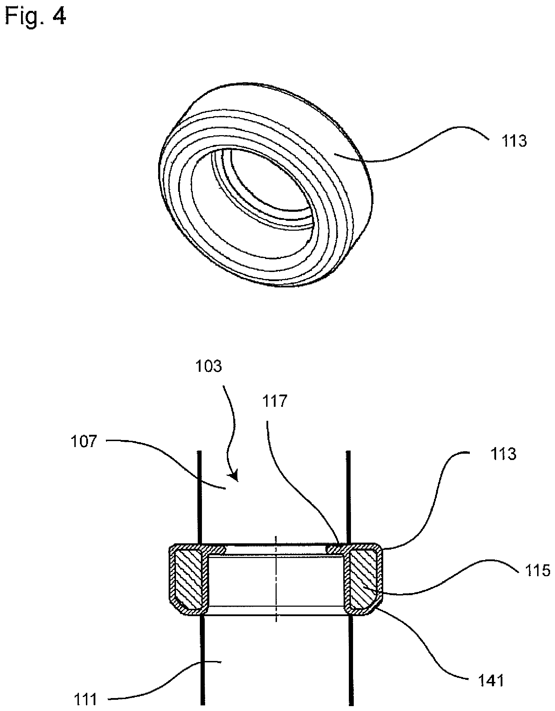

Fig. 4 zeigt verschiedene Ansichten einer Ausführungsform eines ringförmigen Dichtelementes 113 mit einem integrierten Magnetelement 115. Das Dichtelement 113 umgibt das Magnetelement 115 vollständig, so dass keine Flüssigkeit mit dem Magnetelement 115 in Berührung treten kann. Dadurch kann das Magnetelement 115 vor einer Korrosion durch aggressive Substanzen geschützt werden.

An dem Dichtelement 113 ist eine umlaufende Lamelle 117 angespritzt, so dass ein einstückiges Dichtelement 113 entsteht. Die Lamelle 117 weist an der Innenseite eine wulstförmige Verdickung auf, so dass deren Innenbereich verstärkt ist und beim Einsetzen des Zapfventils großen Belastungen standhält.

Das Dichtelement 113 wird in einem Produktionsprozess zusammen mit dem Magnetelement 115 zwischen dem unteren Einfüllstutzenabschnitt 111 des unteren Gehäuseteils 109 und dem oberen Einfüllstutzenabschnitt 107 des oberen Gehäuseteils 105 eingesetzt. Werden die beiden Gehäuseteile 107 und 109 miteinander verschweißt, wird eine Kraft auf das Dichtelement 113 ausgeübt und die Verbindungsstelle zwischen beiden Einfüllstutzenabschnitten 107 und 111 wird abgedichtet.

Das Dichtelement 113 weist eine zylindrische Innenwandung auf. Die zylindrische Innenwandung des Dichtelementes 113 bildet einen Teilabschnitt des Einfüllstutzens 103 zwischen dem oberen Einfüllstutzenabschnitt 107 und dem unteren Einfüllstutzenabschnitt 111. Dadurch kann die Innenwand im Magnetringbereich eingespart werden und ein kompakter, im Durchmesser verringerter Magnetring 115 verwendet werden.

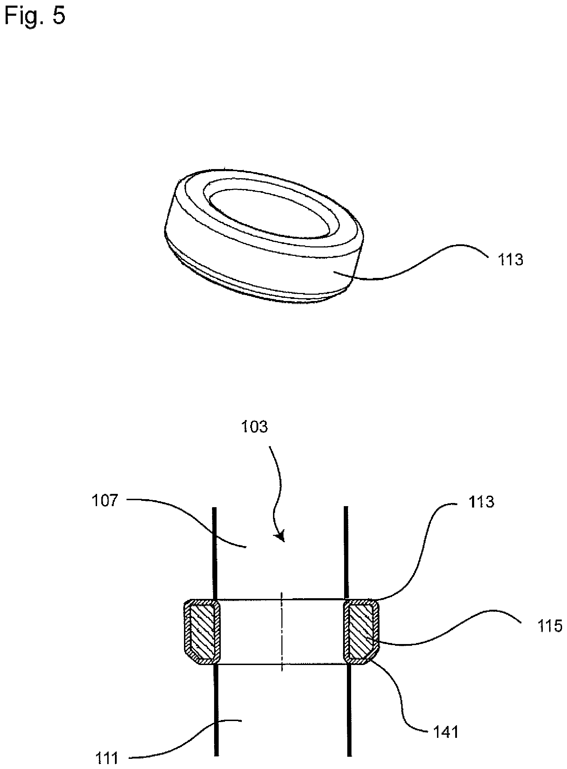

Fig. 5 zeigt verschiedene Ansichten einer weiteren Ausführungsform eines Dichtelementes 113 mit einem Magnetelement 115. Auch in dieser Ausführungsform umgibt das Dichtelement 113 das Magnetelement 115 vollständig.

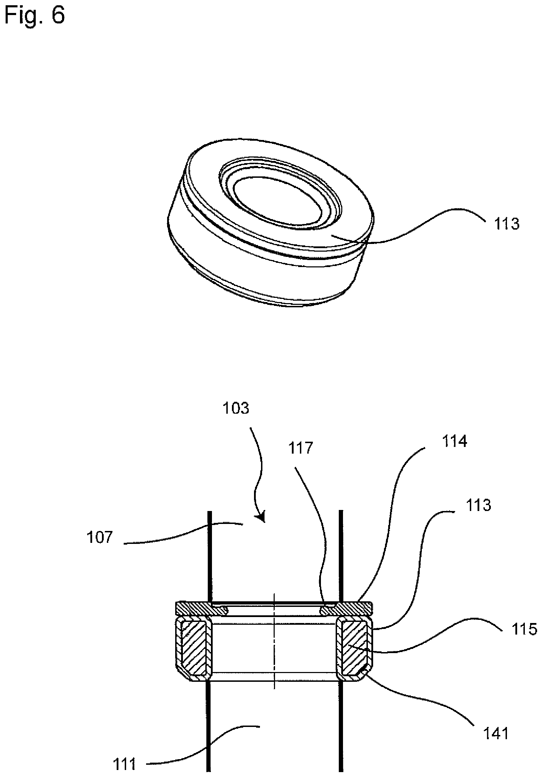

Fig. 6 zeigt verschiedene Ansichten einer weiteren Ausführungsform eines Dichtelementes 113 mit einem Magnetelement 115. In dieser Ausführungsform liegt eine weitere Dichtscheibe 114 auf dem Dichtelement 113 auf. Durch die aufliegende Dichtscheibe 114 wird die in das Innere des Einfüllstutzens 103 ragende Lamelle 117 gebildet, die nach dem Einsetzen des Zapfventils an dessen Außenseite anliegt und den Zwischenraum abdichtet.

Die Dichtscheibe 114 und das Dichtelement 113 mit dem Magnetelement 113 können ebenfalls fest miteinander verbunden sein, so dass diese in nur einem Arbeitsschritt bei der Herstellung des Befüllkopfes 100 eingesetzt werden können.

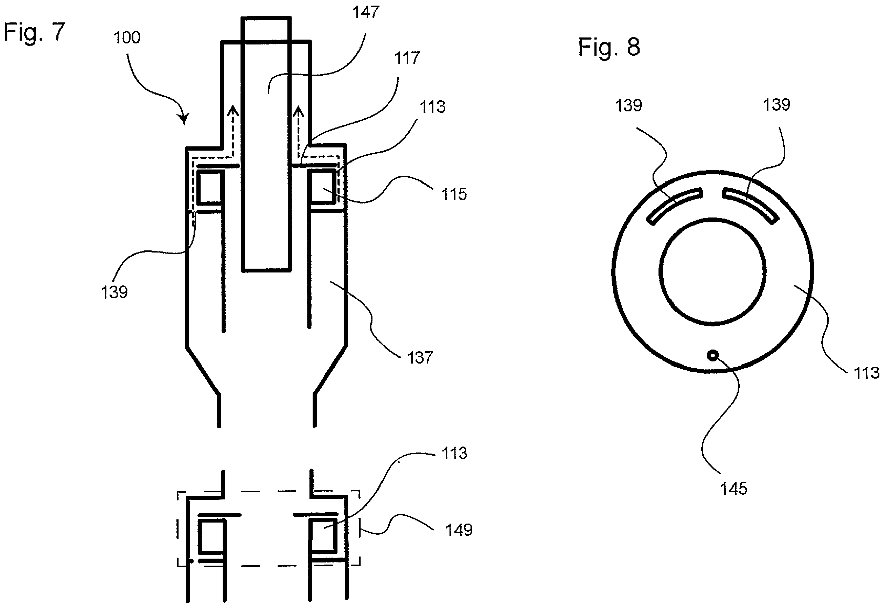

Fig. 7 zeigt einen schematischen Aufbau des Befüllkopfes 100 mit einem eingesetzten Zapfventil 147 und einem gestrichelt gezeichneten Entlüftungspfad. Des Weiteren wird die Lage der Lamelle 117 und des Dichtelementes 113 dargestellt. Der Entlüftungspfad der entweichenden Luft verläuft hinter dem Dichtelement 113 und durch den Bereich des Medientrenners 149.

Fig. 8 zeigt eine schematische Anordnung der schlitzförmigen Entlüftungskammereingang 139, durch die die entweichende Abluft in den Medientrenner 149 eintritt und danach in die Atmosphäre entweichen kann. Zudem ist ein Rücklaufloch 145 gezeigt, durch das mitgewirbelte Reste des Mediums an der tiefsten Stelle (6 Uhr-Position) im Medientrenner-Bereich zurück in das Befüllrohr fließen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befüllkopf
- 103: Einfüllstutzen
- 105: Gehäuseteil
- 107: Einfüllstutzenabschnitt
- 109: Gehäuseteil
- 111: Einfüllstutzenabschnitt
- 113: Dichtelement
- 114: Dichtscheibe
- 115: Magnetelement/Magnetring
- 117: Lamelle
- 119: Rippe
- 121: Austrittsöffnung
- 123: Entlüftungskanal
- 125: Entlüftungskammer
- 127: Abstandshalter
- 129: Gehäuseteil
- 131: Anschlussstutzen
- 133: Gewinde
- 135: Tankentlüftungsstutzen
- 137: Befüllkopfkammer
- 139: Entlüftungskammereingang
- 141: Abschrägung
- 145: Rücklaufloch
- 147: Zapfpistole
- 149: Medientrenner

## Patentansprüche

1. Befüllkopf (100) mit einem Einfüllstutzen (103) für ein Zapfventil, mit:
- einem ersten Gehäuseteil (105) mit einem ersten Einfüllstutzenabschnitt (107);
- einem zweiten Gehäuseteil (109) mit einem zweiten Einfüllstutzenabschnitt (111);
- einem Magnetelement (115), das mit einem Dichtelement (113) mechanisch verbunden, **gekennzeichnet dadurch, dass** das Dichtelement (113) zwischen dem ersten und dem zweiten Einfüllstutzenabschnitt (107, 111) vorgesehen ist.

2. Befüllkopf (100) nach Anspruch 1, wobei das Dichtelement (113) eine in den Einfüllstutzen (103) ragende, umlaufende Lamelle (117) zum Abdichten eines Zwischenraums umfasst.

3. Befüllkopf (100) nach Anspruch 2, wobei die Lamelle (117) im Bereich des ersten Einfüllstutzenabschnitts (107) angeordnet ist.

4. Befüllkopf (100) nach einem der vorangehenden Ansprüche, wobei das zweite Gehäuseteil (109) zumindest eine Rippe (119) zum axialen und/oder radialen Abstützen des Magnetelementes (115) umfasst.

5. Befüllkopf (100) nach Anspruch 2 bis 4, wobei die Lamelle (117) an der Innenseite eine wulstförmige Verdickung aufweist.

6. Befüllkopf (100) nach einem der vorangehenden Ansprüche, wobei das Magnetelement (115) ein Magnetring ist.

7. Befüllkopf (100) nach einem der vorangehenden Ansprüche, wobei der erste Einfüllstutzenabschnitt (107) eine Austrittsöffnung (121) zum Ausleiten von Luft aus dem Befüllkopf (100) umfasst.

8. Befüllkopf (100) nach Anspruch 7, wobei die Austrittsöffnung (121) zwischen dem ersten Einfüllstutzenabschnitt (107) und dem Dichtelement (113) gebildet ist.

9. Befüllkopf (100) nach einem der vorangehenden Ansprüche, wobei das Dichtelement (113) aus einem harnstoffresistenten Material, insbesondere einem thermoplastischen Elastomer, gebildet ist.

10. Befüllkopf (100) nach einem der vorangehenden Ansprüche, wobei das Dichtelement (113) das Magnetelement (115) vollständig umgibt.

11. Befüllkopf (100) nach einem der vorangehenden Ansprüche, wobei das erste Gehäuseteil (105) mit dem zweiten Gehäuseteil (109) einen Entlüftungskanal (123) bildet, der an einer Außenseite des Dichtelements (113) verläuft.

12. Befüllkopf (100) nach einem der vorangehenden Ansprüche, wobei die Innenwandung des Dichtelementes (113) einen Teillabschnitt des Einfüllstutzens (103) bildet.

13. Befüllkopf (100) nach einem der vorangehenden Ansprüche, wobei das das erste Gehäuseteil (105) mit dem zweiten Gehäuseteil (109) eine umlaufende Entlüftungskammer (125) bildet, die das Dichtelement(113) zumindest teilweise umgibt.

14. Befüllkopf (100) nach einem der vorangehenden Ansprüche, wobei das zweite Gehäuseteil (109) einen Entlüftungskammereingang (139) in die Entlüftungskammer (125) umfasst.

15. Befüllkopf (100) nach einem der vorangehenden Ansprüche, wobei das erste Gehäuseteil (105) und/oder das zweite Gehäuseteil (109) Spritzgussformteile sind.

## Claims

1. Filling head (100) with a filler pipe (103) for a nozzle, comprising:
- a first housing part (105) comprising a first filler pipe section (107);
- a second housing part (109) comprising a second filler pipe section (111);
- a magnetic element (115), which is mechanically connected to a seal element (113),
**characterized in that** the seal element (113) is provided between the first and the second filler pipe section (107, 111).

2. Filling head (100) according to claim 1, wherein the seal element (113) comprises a lamella (117) protruding circumferentially in the filler pipe (103) for sealing a gap.

3. Filling head (100) according to claim 2, wherein the lamella (117) is arranged in the range of the first filler pipe section (107).

4. Filling head (100) according to any one of the preceding claims, wherein the second housing part (109) comprises at least a rib (119) for supporting the magnetic element (115) axially and/or radially.

5. Filling head (100) according to claims 2 to 4, wherein the lamella (117) comprises a bead-shaped thickening on the inner side.

6. Filling head (100) according to any one of the preceding claims, wherein the magnetic element (115) is a magnetic ring.

7. Filling head (100) according to any one of the preceding claims, wherein the first filler pipe section (107) comprises a outlet opening (121) for discharging air out of the filling head (100).

8. Filling head (100) according to claim 7, wherein the outlet opening (121) is formed between the first filler pipe section (107) and the seal element (113).

9. Filling head (100) according to any one of the preceding claims, wherein the seal element (113) is formed out of a urea-resistant material, in particular a thermoplastic elastomer.

10. Filling head (100) according to any one of the preceding claims, wherein the seal element (113) surrounds the magnetic element (115) completely.

11. Filling head (100) according to any one of the preceding claims, wherein the first housing part (105) forms with the second housing part (109) a venting channel (123), which continues on an outer side of the seal element (113).

12. Filling head (100) according to any one of the preceding claims, wherein the inner wall of the seal element (113) forms a subsection of the filler pipe (103).

13. Filling head (100) according to any one of the preceding claims, wherein the first housing part (105) forms with the second housing part (109) a circumferential venting chamber (125), which surrounds the seal element (113) at least partly.

14. Filling head (100) according to any one of the preceding claims, wherein the second housing part (109) comprises a venting chamber inlet (139) in the venting chamber (125).

15. Filling head (100) according to any one of the preceding claims, wherein the first housing part (105) and/or the second housing part (109) are injection moulding parts.

## Revendications

1. Tête de remplissage (100) comprenant une tubulure de remplissage (103) pour un pistolet distributeur, comportant:
- une première partie de boîtier (105) comprenant une première section de tubulure de remplissage (107);
- une deuxième partie de boîtier (109) comprenant une deuxième section de tubulure de remplissage (111);
- un élément magnétique (115) qui est connecté à un élément d'étanchéité (113) mécaniquement,
**caractérisée en ce que** l'élément d'étanchéité (113) est prévu entre la première et la deuxième section de tubulure de remplissage (107, 111).

2. Tête de remplissage (100) selon la revendication 1, dans laquelle l'élément d'étanchéité (113) comporte une lamelle (117) tournant autour et faisant saillie dans la tubulure de remplissage (103) afin d'étancher un espace intermédiaire.

3. Tête de remplissage (100) selon la revendication 2, dans laquelle la lamelle (117) est disposée dans la région de la première section de tubulure de remplissage (107).

4. Tête de remplissage (100) selon l'une quelconque des revendications précédentes, dans laquelle la deuxième partie de boîtier (109) comporte au moins une nervure (119) pour supporter axialement et/ou radialement l'élément magnétique (115).

5. Tête de remplissage (100) selon l'une des revendications 2 à 4, dans laquelle la lamelle (117) présente un épaississement en forme de tore dans la partie interne.

6. Tête de remplissage (100) selon l'une quelconque des revendications précédentes, dans laquelle l'élément magnétique (115) est un anneau magnétique.

7. Tête de remplissage (100) selon l'une quelconque des revendications précédentes, dans laquelle la première section de tubulure de remplissage (107) comporte une ouverture de sortie (121) pour évacuer l'air de la tête de remplissage (100).

8. Tête de remplissage (100) selon la revendication 7, dans laquelle l'ouverture de sortie (121) est formée entre la première section de tubulure de remplissage (107) et l'élément d'étanchéité (113).

9. Tête de remplissage (100) selon l'une quelconque des revendications précédentes, dans laquelle l'élément d'étanchéité (113) est formé d'un matériau résistant à l'urée, en particulier d'un élastomère thermoplastique.

10. Tête de remplissage (100) selon l'une quelconque des revendications précédentes, dans laquelle l'élément d'étanchéité (113) entoure complètement l'élément magnétique (115).

11. Tête de remplissage (100) selon l'une quelconque des revendications précédentes, dans laquelle la première partie de boîtier (105) forme avec la deuxième partie de boîtier (109) un canal d'évacuation d'air (123), qui s'étend au niveau d'une partie externe de l'élément d'étanchéité (113).

12. Tête de remplissage (100) selon l'une quelconque des revendications précédentes, dans laquelle la paroi intérieure de l'élément d'étanchéité (113) forme une section partielle de la tubulure de remplissage (103).

13. Tête de remplissage (100) selon l'une quelconque des revendications précédentes, dans laquelle la première partie de boîtier (105) forme avec la deuxième partie de boîtier (109) une chambre de désaération (125) circonférentielle qui entoure l'élément d'étanchéité (113) au moins partiellement.

14. Tête de remplissage (100) selon l'une quelconque des revendications précédentes, dans laquelle la deuxième partie de boîtier (109) comporte une entrée de chambre de désaération (139) dans la chambre de désaération (125).

15. Tête de remplissage (100) selon l'une quelconque des revendications précédentes, dans laquelle la première partie de boîtier (105) et/ou la deuxième partie de boîtier (109) sont des pièces de moulage par injection.
